# FASCICULE DE BREVET EUROPEEN

(11) **EP 0 366 644 B1**
(45) Date de publication et mention de la délivrance du brevet: **29.12.1993**
(21) Numéro de dépôt: 89870162.8
(22) Date de dépôt: 25.10.1989
(51) Int. Cl.: C02F 3/16, B01F 5/10

(54) **Mélangeur et/ou aérateur pour eaux résiduaires**
Mischer und/oder Belüfter für Abwasser
Mixer and/or aerator for waste water

(30) Priorité: 26.10.1988 BE 8801233
(43) Date de publication de la demande: 02.05.1990
(73) Titulaire: Haegeman, Johny Hector, B-1500 Halle (BE)
(72) Inventeur: Haegeman, Johny Hector, B-1500 Halle (BE)
(74) Mandataire: Overath, Philippe

(56) Documents cités:
- BE-A- 884 216
- DE-A- 2 119 638
- GB-A- 1 428 349

## Description

La présente invention concerne un appareil destiné à mélanger et/ou aérer des eaux résiduaires en flottant sur la surface de l'eau.

Ce genre d'appareil comprend en général un moteur électrique dont l'axe est dirigé vers le bas et qui entraîne une hélice capable de propulser l'eau, une conduite ou cône de guidage inférieur, un stabilisateur, un déflecteur supérieur et au moins un flotteur destiné à maintenir l'appareil à la surface de l'eau.

D'après le sens de rotation de l'hélice l'appareil peut être utilisé soit comme mélangeur en aspirant l'eau qui se trouve à la surface du bassin vers l'hélice qui propulse cette eau vers le fond du bassin, soit comme aérateur en aspirant l'eau du fond du bassin et en la propulsant sur la surface de l'eau.

On comprend tout de suite que pour effectuer ces deux opérations différentes, il faut pouvoir régler le niveau d'immersion de l'appareil par rapport à la surface de l'eau pour obtenir des bons rendements.

Les mélangeurs ou aérateurs flottants destinés au traitement des eaux résiduaires sont connus d'une manière générale. C'est ainsi, par exemple, que le brevet belge BE 884.216 décrit une installation pour le mélange de gaz avec un liquide, ou inversement, ainsi que pour le dégazage d'un liquide constitué d'un générateur de puissance avec un axe entraîné équipé d'une hélice qui se trouve en dessous de la surface de l'eau, tandis qu'une roue à aubes est fixée sur la partie de l'axe située au-dessus de l'hélice.

Un appareil analogue a été décrit dans le brevet BE 893.687 et se caractérise par le fait que l'hélice et la roue à aubes font partie d'un seul corps de rotor combiné dont la partie inférieure est constituée par une pompe à hélice axiale et la partie supérieure par un rotor centrifuge.

Pour le traitement des eaux résiduaires, il est toutefois avantageux de saturer périodiquement et alternativement l'eau d'oxygène ou de mélanger simplement celle-ci sans addition spéciale d'oxygène.

De cette manière, on obtient que les processus, connus de tout spécialiste, qui consistent dans les alternances de nitrification et de dénitrification, peuvent être commandés plus facilement tout en les maintenant sous contrôle. Ceci a comme conséquence que la quantité totale d'oxygène qui est nécessaire pour le traitement des eaux résiduaires peut être sensiblement réduite.

Le document DE-A-21 19 638 divulgue un aérateur de surface muni d'un flotteur comprenant deux chambres indépendantes dont une reliée à un conduit d'alimentation en liquide ou d'air de façon à pouvoir remplir ou vider une chambre du flotteur permettant ainsi le réglage en hauteur de l'ensemble. Ce réglage en hauteur par rapport au niveau d'eau est toutefois uniquement lié au réglage du débit de l'eau et de l'apport en oxygène nécessaire.

Le brevet AT-PS-378 167 décrit un aérateur de surface flottant pouvant être transformé en mélangeur par immersion contrôlée de l'ensemble. Pour ce faire, il est muni d'un dispositif pour régler le niveau d'immersion dans lequel on fait appel à un flotteur monté en position centrale qui peut être rempli à volonté de ballast et qui est stabilisé par au moins un flotteur supplémentaire fortement écarté et connecté de manière flexible à des traverses, par exemple au moyen d'une chaîne. Il en résulte alors que, si l'immersion est suffisante, le ou les flotteurs situés à distance exercent un effet de stabilisation sur le mélangeur-aérateur par l'intermédiaire de la traverse et de la chaîne tendue.

Un appareil de ce genre présente toutefois de graves inconvénients.

En effet, les flotteurs supplémentaires écartés flottent toujours à la surface de l'eau et entravent donc le tracé d'éjection de l'eau qui se répartie sur la surface de l'eau pendant la phase d'aération. Il en résulte une forte diminution du rendement ainsi que de la stabilité par suite de l'apparition de tourbillons incontrôlés autour de ces flotteurs. D'autre part, l'addition de traverses, de chaînes, de flotteurs écartés supplémentaires, rendent l'appareil plus coûteux, mécaniquement plus sensible et plus difficile à entretenir.

Si le mélangeur-aérateur est partiellement enfoncé par remplissage du flotteur central avec du ballast, l'installation n'est alors stabilisé qu'à partir du moment où les flotteurs écartés peuvent exercer une force sur les traverses, c'est-à-dire à partir du moment ou la chaîne de jonction entre la traverse et le flotteur est tendue.

Lorsque le mélangeur-aérateur est en position de flottaison, leur fonction de stabilisation n'existe pas et cette situation continue lorsque l'immersion progresse, jusqu'à ce que la chaîne de jonction soit tendue. Tout déplacement du ballast dans le flotteur remplissable, par exemple parce que le liquide remplissant le flotteur remplissable est déplacé par une vague ou par l'effet du vent, provoque une forte déstabilisation du dispositif qui doit être compensée, dans un mode de réalisation préféré de l'invention, en plaçant des cloisons intermédiaires perforées dans le réservoir de ballast remplissable.

Pour empêcher que l'air ne soit directement aspiré à travers l'hélice lorsque le dispositif est immergé et fonctionne comme mélangeur, il faut disposer en outre une plaque de protection entre la surface de l'eau et l'hélice. Cette plaque de protection, montée au-dessus du flotteur remplissable, rend la stabilisation du dispositif encore plus problématique vu que, quel que soit le degré d'immersion, elle déplace le centre de gravité du dispositif encore davantage au-dessus du centre de flottaison du flotteur central; en d'autres termes, la tête du dispositif s'en trouve alourdie. C'est surtout pendant les phases intermédiaires de l'immersion où les flotteurs fixés sur les traverses ne peuvent encore exercer aucune action de stabilisation, qu'une disposition de ce genre est désavantageuse, d'autant plus que des mouvements incontrôlés du ballast dans le flotteur remplissable peuvent encore aggraver la situation. D'autre part, la plaque de protection qui vient se placer complètement jusqu'à une certaine profondeur en dessous de la surface de l'eau en cas de remplissage, constitue un obstacle sérieux pour mettre à nouveau le dispositif en position de flottaison, vue que toute l'eau qui se trouve au-dessus de cette plaque doit être chassée latéralement avant que l'unité ne puisse émerger à nouveau de l'eau pour fonctionner comme aérateur.

Le but de la présente invention est d'éliminer ces inconvénients grâce à un appareil simple et fiable ainsi qu'aux procédés tels que décrits dans les revendications 1 à 10.

D'autres données et caractéristiques de l'invention seront décrites ci-après dans un exemple de réalisation non limitatif, à l'aide des figures annexées.

La figure 1 représente une vue latérale du mélangeur-aérateur conforme à la présente invention, avec les flotteurs vus en coupe.

La figure 2 représente une vue latérale du mélangeur-aérateur à l'état immergé, c'est-à-dire fonctionnant comme mélangeur. Les flotteurs centraux sont représentés en coupe.

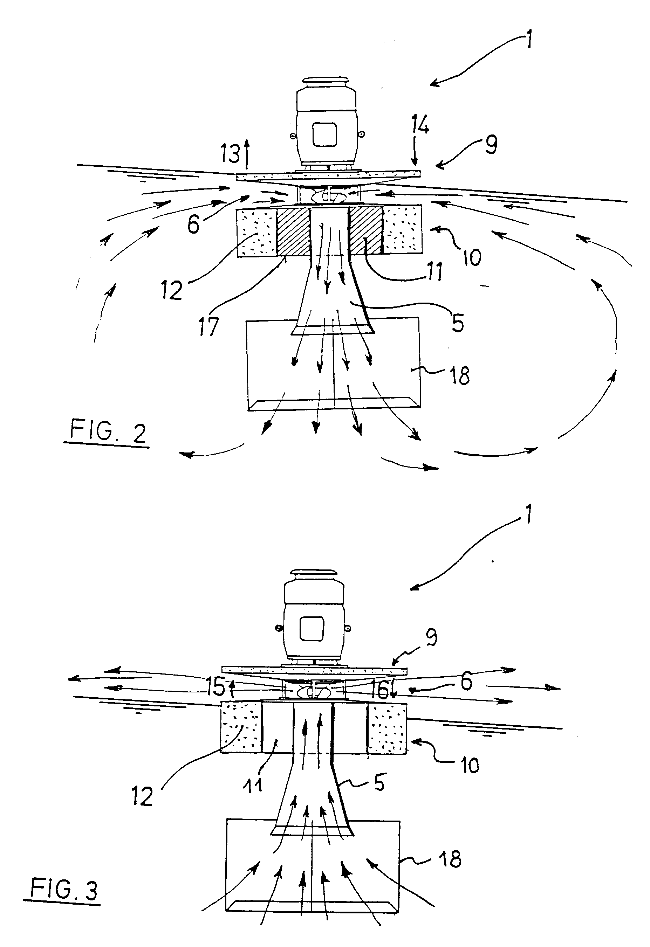

Le figure 3 représente une vue latérale du mélangeur-aérateur en position de flottaison, c'est-à-dire fonctionnant comme aérateur. Les flotteurs centraux sont représentés en coupe.

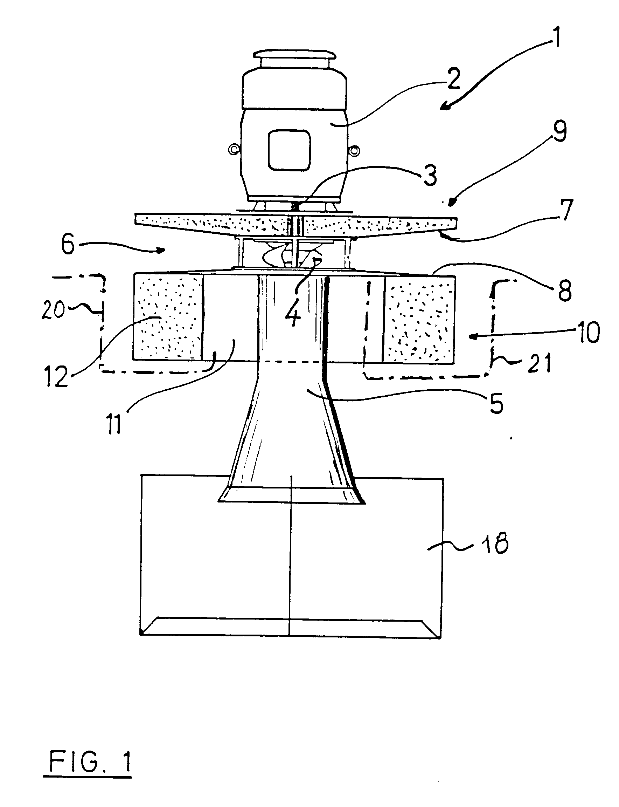

Comme montré à la figure 1, l'appareil mélangeur-aérateur 1 comprend un moteur 2 qui entraîne par une arbre 3 une hélice 4 qui déplace l'eau. En dessous de l'hélice 4 est monté un tube avec cône de guidage de l'eau 5 et une croix de stabilisation 18. D'après le sens de rotation de cette hélice 4, l'eau est aspirée dans le tube de guidage de l'eau 5 et est distribuée uniformément au-dessus de la surface de l'eau par un dispositif de déviation 6 dans le cas ou l'appareil fonctionne comme aérateur ou, inversement, l'eau de surface est aspirée à travers du dispositif de déviation 6 et est propulsée vers le bas par le tube de guidage de l'eau dans le cas où l'appareil joue le rôle de mélangeur. Dans ce dernier cas, de l'air peut être amené directement dans la zone de l'hélice par une conduite d'air séparée (non illustrée), si bien que le mélange d'air sous l'eau fait partie des possibilités.

Conformément à l'invention, le dispositif de déviation 6 est formé par l'ouverture entre deux flotteurs 9, 10, montés à distance l'un au-dessus de l'autre et disposés concentriquement par rapport à l'axe du moteur 2, l'ouverture du dispositif de déviation 6 étant délimitée par le bord inférieur profilé 7 du flotteur supérieur 9 et le bord supérieur 8 d'un flotteur composé 10, qui comprend un flotteur 12 et une chambre de ballast 11 disposée concentriquement à l'intérieur du flotteur 12 et montée de manière fixe autour du tube de guidage 5. Cette chambre 11 peut être remplie à volonté de ballast qui est, par exemple, l'eau environnante, si bien que sa flottaison peut être réglée entre deux valeurs limites. Pour réaliser ce remplissage ou vidange de la chambre 11, on prévoit une conduite 20 d'amenée et d'évacuation de l'eau et une conduite 21 d'amenée et d'évacuation d'air, ces conduites 20 et 21 étant reliées de façon connue en soi à un système de contrôle et de commande à distance (non illustré). Si la chambre 11 est complètement remplie de ballast, la flottaison des flotteurs 10 et 9 réunis est encore suffisante pour empêcher que le flotteur supérieur 9 ne se place complètement en dessous du niveau de l'eau.

La figure 2 représente schématiquement la situation lorsque l'appareil 1 fonctionne comme mélangeur. L'appareil est représenté en position inclinée exagérée, afin de montrer comment le flotteur supérieur 9 exerce un couple de forces représenté par les flèches 13 et 14, de manière à stabiliser le mélangeur-aérateur en position verticale. Une fonction analogue est assurée par le flotteur annulaire 12 qui entoure la chambre centrale 11 remplie de ballast, qui est montée elle-même, à son tour, autour du tube de guidage de l'eau 5.

En aucune circonstance, le flotteur supérieur 9 ne disparait complètement sous la surface de l'eau si bien que, si l'appareil 1 est soulevé davantage hors de l'eau afin de pouvoir fonctionner comme aérateur comme l'indique la figure 3, aucune masse d'eau située au-dessus ne doit être déplacée. Le flotteur supérieur 9 assure également le rôle de dispositif de protection pour empêcher que l'air ne soit aspiré directement par l'hélice 4 en passant par le dispositif de déviation 6. Comme déjà mentionné, un mode de réalisation comme mélangeur permet également d'amener directement de l'air dans la zone de l'hélice 4 par une conduite d'air séparée, si bien que le mélange avec de l'air, sous l'eau, appartient au domaine des possibilités. Le bord inférieur 17 du corps flottant 10, constitué par le flotteur 12 et la chambre 11 pouvant être remplie de ballast, empêche, d'autre part, que l'eau ne puisse arriver à l'hélice 4 par un autre chemin que le dispositif de déviation 6.

Pour pouvoir fonctionner comme aérateur, le ballast est évacué, totalement ou partiellement, de la chambre 11, si bien que la flottaison augmente suffisamment pour que le dispositif de déviation 6 vienne se placer à la hauteur souhaitée par rapport à la surface de l'eau comme montré à la figure 3.

Le flotteur fixe 12 exerce une action stabilisatrice grâce à sa forme annulaire autour de la chambre vide 11, quel que soit le degré d'immersion de l'appareil 1. La figure 3 représente l'appareil 1 en position inclinée exagérée, pour montrer comment un couple de forces représenté par les flèches 15 et 16 assure la stabilisation en position verticale.

D'autres modes de réalisation peuvent être envisagés sans sortir du cadre de la présente invention.

On peut également prévoir un ou plusieurs déflecteurs incorporés dans la croix de stabilisation 18 ou montés à proximité de celle-ci afin de guider les courants d'eau provenant de ou aspirés par l'appareil 1.

## Revendications

1. Appareil destiné à mélanger et/ou aérer des eaux résiduaires en flottant sur la surface de l'eau comprenant un moteur (2) avec un arbre (3) dirigé vers le bas et entraînant une hélice (4), un tube de guidage (5), un dispositif de déviation de l'eau (6) et au moins un flotteur muni d'un ballast réversible, caractérisé en ce que le sens de rotation de l'hélice (4) est réversible et qu'il comprend au moins deux flotteurs, un flotteur supérieur (9) et un flotteur inférieur (10) muni du ballast (11), ces deux flotteurs sont montés à distance l'un au-dessus de l'autre et disposés concentriquement par rapport à l'axe du moteur (2) permettant à l'appareil de se positionner entre deux niveaux limites par rapport à la surface de l'eau :
- un niveau bas où seul le flotteur supérieur (9) se trouve à la surface de l'eau et dans lequel l'appareil est apte à être utilisé comme mélangeur et
- un niveau haut où le flotteur inférieur (10) est opérationnel et dans lequel l'appareil est apte à être utilisé comme aérateur.

2. Appareil selon la revendication 1, caractérisé en ce que le flotteur inférieur (10) est composé d'un flotteur (12) disposé à la périphérie extérieure et une chambre de ballast réversible (11) disposée concentriquement à l'intérieur du flotteur (12).

3. Appareil selon la revendication 1, caractérisé en ce que le flotteur inférieur (10) est monté autour du tube de guidage (5).

4. Appareil selon la revendication 1, caractérisé en ce que le dispositif de déviation (6) de l'eau est formé par l'ouverture délimitée par le bord inférieur profilé (7) du flotteur supérieur (9) et le bord supérieur (8) du flotteur inférieur (10).

5. Appareil selon les revendications 1 et 2, caractérisé en ce que la chambre de ballast réversible (11) est entourée par au moins un flotteur (12) relié de manière fixe à la chambre (11).

6. Appareil selon la revendication 1, caractérisé en ce que lorsque l'appareil se trouve au niveau bas (mode mélangeur) le flotteur supérieur (9) assure le rôle de dispositif de protection pour empêcher que l'air ne soit aspiré directement par l'hélice (4) en passant par le dispositif de déviation (6).

7. Appareil selon les revendications 1 et 6, caractérisé en ce que lorsque l'appareil se trouve au niveau bas (mode mélangeur), le bord inférieur (17) du corps flottant (10), constitué par le flotteur (12) et la chambre de ballast (11), est réalisé de telle manière qu'il empêche l'eau d'arriver à l'hélice (4) par un autre chemin que le dispositif de déviation (6).

8. Appareil selon la revendication 1, caractérisé en ce qu'on prévoit une conduite séparée d'amenée d'air en direct dans la zone de l'hélice (4) afin de pouvoir aérer l'eau en apportant de l'air (oxygène) dans l'eau lorsque l'appareil travaille comme mélangeur au niveau bas.

9. Procédé pour mélanger des eaux résiduaires au moyen d'un appareil suivant l'une quelconque des revendication 1 à 8, caractérisé en ce que l'hélice (4) est mise en rotation dans une direction où elle provoque l'aspiration horizontale des eaux résiduaires se trouvant près de la surface par le dispositif de déviation (6) pour être propulsées au travers du tube de guidage (5) vers le fond du bassin.

10. Procédé d'aération des eaux résiduaires au moyen d'un appareil suivant l'une quelconque des revendications 1 à 8, caractérisé en ce que l'hélice est mise en rotation dans une direction où elle provoque l'aspiration verticale des eaux résiduaires à partir du fond du bassin en passant par le tube de guidage (5) pour être propulsées sur la surface de l'eau au travers du dispositif de déviation (6) formé entre les deux flotteurs (9,10).

## Claims

1. An apparatus for mixing and/or aerating effluent floating on the surface of water, comprising: a motor (2) having a downwardly directed shaft (3) driving a screw (4); a guide tube (5); a water deflecting device (6); and at least one float having a reversible ballast, characterized in that the direction of rotation of the screw (4) can be reversed and that it comprises at least two floats, an upper float (9) and a lower float (10) having the ballast (11), the two floats being mounted at a distance one above the other and disposed concentrically with respect to the shaft of the motor (2), thus enabling the apparatus to be positioned between two limiting levels in relation to the surface of the water:
- a low level at which only the upper float (9) is situated on the surface of the water and in which the apparatus is adapted to be used as a mixer, and
- a high level in which the lower float (10) is operational and in which the apparatus is adapted to be used as an aerator.

2. An apparatus according to Claim 1, characterized in that the lower float (10) comprises a float (12) disposed at the outer periphery and a reversible ballast chamber (11) disposed concentrically inside said float (12).

3. An apparatus according to Claim 1, characterized in that the lower float (10) is mounted around the guide tube (5).

4. An apparatus according to Claim 1, characterized in that the water deflecting device (6) is formed by the aperture bounded by the lower profiled edge (7) of the upper float (9) and the upper edge (8) of the lower float (10).

5. An apparatus according to Claims 1 and 2, characterized in that the reversible ballast chamber (11) is enclosed by at least one float (12) rigidly attached to the chamber (11).

6. An apparatus according to Claim 1, characterized in that when the apparatus is at the low level (mixer mode) the upper float (9) acts as a protector apparatus to prevent air from being sucked in directly by the screw (4) as it flows through the deflecting device (6).

7. An apparatus according to Claims 1 and 6, characterized in that when the apparatus is at the low level (mixer mode), the lower edge (17) of the float (10), formed by the float (12) and the ballast chamber (11), is so constructed as to prevent water from reaching the screw (4) via any path other than via the deflecting device (6).

8. An apparatus according to Claim 1, characterized in that a separate air delivery conduit is provided directly in the zone of the screw (4), to enable the water to be aerated by supplying air (oxygen) to the water when the apparatus is operating as a mixer at the lower level.

9. A method of mixing effluent by means of an apparatus according to any of Claims 1 to 8, characterized in that the screw (4) is rotated in a direction in which it causes the effluent situated close to the surface to be horizontally sucked in by the deflecting device (6) to be propelled through the guide tube (5) to the bottom of the basin.

10. A method of aerating effluent by means of an apparatus according to any of Claims 1 to 8, characterized in that the screw is rotated in a direction in which it causes the effluent to be sucked in vertically from the bottom of the basin as it flows through the guide tube (5) to be propelled to the surface of the water through the deflecting device (6) formed between the two floats (9,10).

## Patentansprüche

1. Vorrichtung zum Mischen und/oder Belüften von Abwässern, wobei die Vorrichtung auf der Wasseroberfläche schwimmt, umfassend einen Motor (2) mit einer nach unten gerichteten und eine Schraube (4) antreibenden Welle (3), ein Führungsrohr (5), eine Wasserumlenkeinrichtung (6) und wenigstens einen Schwimmer mit reversibler Ballastierung,
dadurch gekennzeichnet, daß
die Drehrichtung der Schraube (4) umkehrbar ist und daß die Vorrichtung wenigstens zwei Schwimmer umfaßt, einen oberen Schwimmer (9) und einen unteren Schwimmer (10) mit Ballastierung (11), wobei die beiden Schwimmer voneinander beabstandet übereinander angebracht sind und zur Achse des Motors (2) konzentrisch angeordnet sind, wodurch sich die Vorrichtung relativ zur Wasseroberfläche zwischen zwei Grenzniveaus positionieren kann:
- einem niedrigen Niveau, bei dem sich nur der obere Schwimmer (9) an der Wasseroberfläche befindet und die Vorrichtung als Mischer verwendbar ist, und
- einem hohen Niveau, bei dem der untere Schwimmer (10) wirksam ist und die Vorrichtung als Belüfter verwendbar ist.

2. Vorrichtung nach Anspruch 1, dadurch gekennzeichnet, daß der untere Schwimmer (10) einen am äußeren Umfang angeordneten Schwimmer (12) und eine Kammer (11) für reversible Ballastierung umfaßt, welche innerhalb des Schwimmers (12) konzentrisch angeordnet ist.

3. Vorrichtung nach Anspruch 1, dadurch gekennzeichnet, daß der untere Schwimmer (10) um das Führungsrohr (5) herum angebracht ist.

4. Vorrichtung nach Anspruch 1, dadurch gekennzeichnet, daß die Wasserumlenkeinrichtung (6) durch die Öffnung gebildet ist, welche von dem unteren profilierten Rand (7) des oberen Schwimmers (9) und von dem oberen Rand (8) des unteren Schwimmers (10) begrenzt ist.

5. Vorrichtung nach den Ansprüchen 1 und 2, dadurch gekennzeichnet, daß die Kammer (11) für reversible Ballastierung von wenigstens einem Schwimmer (12) umgeben ist, welcher in fester Weise mit der Kammer (11) verbunden ist.

6. Vorrichtung nach Anspruch 1, dadurch gekennzeichnet, daß dann, wenn sich die Vorrichtung im niedrigen Niveau (Mischermodus) befindet, der obere Schwimmer (9) die Rolle einer Schutzeinrichtung annimmt, um zu verhindern, daß Luft von der Schraube (4) durch die Umlenkeinrichtung (6) hindurch angesaugt wird.

7. Vorrichtung nach den Ansprüchen 1 und 6, dadurch gekennzeichnet, daß dann, wenn sich die Vorrichtung im niederen Niveau (Mischermodus) befindet, der untere Rand (17) des schwimmenden Körpers (10), der von dem Schwimmer (12) und der Ballastkammer (11) gebildet ist, derart ausgebildet ist, daß er verhindert, daß das Wasser auf einem anderen Weg als über die Umlenkeinrichtung (6) zur Schraube (4) gelangt,.

8. Vorrichtung nach Anspruch 1, dadurch gekennzeichnet, daß eine separate Leitung zur direkten Luftzufuhr im Bereich der Schraube (4) vorgesehen ist, um das Wasser durch Zufuhr von Luft (Sauerstoff) zum Wasser belüften zu können, wenn die Vorrichtung als Mischer im niedrigen Niveau arbeitet.

9. Verfahren zum Mischen von Abwässern mittels einer Vorrichtung nach einem der Ansprüche 1 bis 8, dadurch gekennzeichnet, daß die Schraube (4) in einer Richtung gedreht wird, in der sie das horizontale Ansaugen von sich nahe der Oberfläche befindenden Abwässern durch die Umlenkeinrichtung (6) bewirkt, um sie durch das Führungsrohr (5) hindurch zum Boden des Beckens anzutreiben.

10. Verfahren zum Belüften von Abwässern mittels einer Vorrichtung nach einem der Ansprüche 1 bis 8, dadurch gekennzeichnet, daß die Schraube in einer Richtung gedreht wird, in der sie das vertikale Ansaugen der Abwässer vom Boden des Beckens durch das Führungsrohr (5) hindurch bewirkt, um sie auf die Wasseroberfläche durch die zwischen den zwei Schwimmern (9, 10) gebildete Umlenkeinrichtung (6) hindurch zu befördern.
